Europäisches Patentamt

European Patent Office

Office européen des brevets

(11) Veröffentlichungsnummer: **0 288 863**

**A1**

# EUROPÄISCHE PATENTANMELDUNG

(21) Anmeldenummer: 88106166.7

(22) Anmeldetag: 19.04.88

(51) Int. Cl.4 **C08L 95/00 , C08K 7/02 , C08J 3/22**

(30) Priorität: 01.05.87 DE 3714620
05.05.87 DE 3714828

(43) Veröffentlichungstag der Anmeldung:
02.11.88 Patentblatt 88/44

(84) Benannte Vertragsstaaten:
**ES**

(71) Anmelder: **Rettenmaier, Stephan**
**Ulmenweg 2**
**D-4790 Paderborn(DE)**

(72) Erfinder: **Rettenmaier, Stephan**
**Ulmenweg 2**
**D-4790 Paderborn(DE)**

(74) Vertreter: **Hoeger, Stellrecht & Partner**
**Uhlandstrasse 14c**
**D-7000 Stuttgart 1(DE)**

(54) **Füllfasern umfassendes Granulat.**

(57) Um ein Verfahren zur Herstellung von Bitumenmassen, umfassend mit Füllfasern stabilisiertes Bitumen, derart zu verbessern, daß ohne Schwierigkeiten eine homogene Verteilung der Füllfasern in dem Bitumen erreichbar ist, wird vorgeschlagen, daß zur Herstellung der Bitumenmassen die Einmischung der Füllfasern in das fließfähige Bitumen durch Zusetzen eines sich in dem fließfähigen Bitumen auflösenden, die Füllfasern umfassenden Granulats erfolgt.

EP 0 288 863 A1

## Füllfasern umfassendes Granulat

Die Erfindung betrifft ein Füllfasern umfassendes Granulat, insbesondere zum Einbringen der Füllfasern in Bitumenmassen, sowie ein Verfahren zur Herstellung des Füllfasern umfassenden Granulats. Im folgenden sind unter dem Begriff Bitumen sämtliche bituminösen Stoffe, umfassend Bitumen, gegebenenfalls auch polymermodifiziertes Bitumen, und, oder Teer und, oder Pech, zu verstehen.

Die Erfindung betrifft des weiteren ein Verfahren zur Herstellung von Bitumenmassen umfassend mit Füllfasern stabilisiertes Bitumen.

Es ist bekannt, Bitumenmassen Füllfasermaterial zuzusetzen, um die Fließeigenschaften der Bitumenmassen in der Weise zu beeinflussen, daß diese weniger stark zum Fließen neigen, d. h. die Füllfasern haben in dem Bitumen eine thixotrope Wirkung. Dies hat beispielsweise den Vorteil, daß eine Bitumenmasse in Form einer Anstrichmasse an einer senkrechten Wand dicker aufgetragen werden kann und nicht so schnell abläuft. Bei Verwendung einer Bitumenmasse auf einer Dachpappenhaut hält diese dann, wenn sie mit Füllfasern stabilisiert ist, der Sonneneinstrahlung besser Stand, da das Bitumen ortsgebundener bleibt.

Als weiteres Beispiel für eine Bitumenmasse sei eine beim Straßenbau verwendete Asphaltmischung genannt, bei welcher der Bitumenanteil dann, wenn die Bitumenmasse mit Füllfasern stabilisiert ist, wesentlich erhöht werden kann, ohne daß ein Entmischen während des Transports oder beim Auftragen auf den Straßenuntergrund entsteht.

Bei den bisher bekannten Verfahren zur Herstellung von Bitumenmassen werden die Füllfasern vielfach vor dem Zusetzen des Bitumens, gegebenenfalls mit Zuschlagstoffen, in einen Mischer eingebracht und in diesem vorgemischt. Anschließend wird das Bitumen zugesetzt.

Bei diesem Verfahren treten jedoch in der Regel Schwierigkeiten auf, da sich die Füllfasern in der Bitumenmasse nicht homogen verteilen. Diese Schwierigkeiten könnten zwar dadurch behoben werden, daß sehr kurze Füllfasern verwendet werden, diese haben jedoch den Nachteil, daß sie eine wesentlich geringere thixotrope Wirkung erzeugen als lange Füllfasern, welche ihrerseits jedoch sehr leicht zum Verwatten und Agglomerieren neigen. Gerade diese wegen ihrer starken thixotropen Wirkung bevorzugten Füllfasern können nur mit Schwierigkeiten homogen in die Bitumenmassen eingearbeitet werden.

Zum Beispiel wird für das Ausbessern von Straßenbelägen und von Deckschichtbelägen häufig eine Mischung aus Sand oder sehr feinem Split mit Bitumen verlangt. In ein derart feines Mineralkorn lassen sich insbesondere lange und zum Verwatten neigende Füllfasern auf herkömmlichen Mischanlagen nur sehr schwer einarbeiten, so daß es häufig zu Fehlmischungen kommt.

Hinzu kommt noch als weitere Schwierigkeit das Problem, daß eine Vielzahl von Bitumenmassen innerhalb sehr kurzer Zeit hergestellt werden müssen, z. B. muß der Mischvorgang bei einem bituminierten Straßenbelag bei Mischzeiten von im allgemeinen wenigen Sekunden ablaufen. Dies führt dazu, daß sich die Schwierigkeiten beim Einmischen der langen und zum Verwatten sowie Agglomerieren neigenden Füllfasern noch verstärken, so daß die Füllfasern nicht ausreichend gleichmäßig im Mischgut verteilt werden und zu "Nestern" und folglich zu Fehlmischungen führen.

Der Erfindung liegt daher die Aufgabe zugrunde, ein Verfahren der gattungsgemäßen Art derart zu verbessern, daß ohne Schwierigkeiten eine homogene Verteilung der Füllfasern in dem Bitumen erreichbar ist.

Diese Aufgabe wird erfindungsgemäß dadurch gelöst, daß zur Herstellung der Bitumenmassen die Einmischung der Füllfasern in das fließfähige Bitumen durch Zusetzen eines sich in dem fließfähigen Bitumen auflösenden, die Füllfasern umfassenden Granulats erfolgt.

Dieses Verfahren hat den großen Vorteil, daß im Gegensatz zur bisher bekannten Zugabe der Füllfasern in loser oder gepreßter Form durch die Zugabe der Füllfasern in granulierter Form bereits von Anfang an eine Grobverteilung der Füllfasern in dem fließfähigen Bitumen erreicht wird und die sich anschliessende Feinverteilung durch das sich in dem fließfähigen Bitumen auflösende Granulat erfolgen kann. Durch die Auflösung des Granulats in dem fließfähigen Bitumen werden die einzelnen Füllfasern aus einem Granulatkörper sofort von dem diesen umgebenden Bitumen erfaßt und in diesem verteilt. Damit kann die Gefahr der Bildung von Cellulosefaserbündeln und somit die Gefahr von Fehlmischungen nahezu ausgeschlossen werden.

Ein weiterer für die Führung des Verfahrens beachtlicher Vorteil ist darin zu sehen, daß die Handhabung der Cellulosefasern beim Zumischen durch die Verwendung des Granulats wesentlich vereinfacht wird, denn dieses kann aufgrund seiner guten Fließeigenschaften in einfacher Weise gefördert und dosiert werden, während die Handhabung von losen oder auch gepreßten Füllfasern, die zum Verwatten und Agglomerieren neigen, mit herkömmlichen Fördermitteln nur schwer möglich ist.

Bei der Verwendung von Asbestfasern als Füllfasern hat die Erfindung noch den weiteren Vorteil, daß bei der Herstellung der Bitumenmassen, z. B.

auf einer Baustelle, keine offenen und ungebundenen Asbestfasern gehandhabt werden müssen, was aufgrund der gesundheitsschädlichen Wirkungen von Asbestfasern bedenklich wäre, sondern daß die Asbestfasern beim Einmischen in gesundheitlich unbedenklicher Form, nämlich eingebunden in Granulat, vorliegen.

Des weiteren liegt der Erfindung die Aufgabe zugrunde, ein Füllfasern umfassendes Granulat, insbesondere zum Einbringen der Füllfasern in Bitumenmassen, zu schaffen.

Diese Aufgabe wird erfindungsgemäß durch ein Granulat gelöst, das ein in fließfähigem Bitumen seine Bindungswirkung verlierendes Bindemittel und Füllfasern aufweist.

Unter fließfähigem Bitumen ist dabei ein Bitumen zu verstehen, welches entweder durch Erhitzen oder durch Zusatz von geeigneten Lösungsmitteln fließfähig gemacht wurde. Das Bindemittel soll daher so ausgebildet sein, daß es entweder bei hoher Temperatur oder durch die Gegenwart von Lösungsmittel bei niedriger Temperatur seine Bindungswirkung verliert.

Durch ein derart ausgewähltes Bindemittel ist das Granulat so zusammengesetzt, daß es sich in fließfähigem Bitumen auflöst und damit die Füllfasern freigibt, so daß diese im fließfähigen Bitumen homogen verteilt werden können.

Bei einer besonders vorteilhaften Zusammensetzung des erfindungsgemäßen Granulats ist vorgesehen, daß der Gewichtsanteil des Bindemittels mindestens ungefähr 1/5 des Gesamtgewichts des Granulats beträgt.

Noch vorteilhafter ist es jedoch, wenn der Gewichtsanteil des Bindemittels höher ist, insbesondere mindestens 1/4 oder 1/3 des Gesamtgewichts oder gar die Hälfte des Gesamtgewichts des Granulats. Ein derart hoher Anteil von Bindemittel hat den Vorteil, daß bei der Herstellung des Granulats die Füllfasern wesentlich weniger stark strapaziert werden, da das Bindemittel selbst nämlich eine Schmierwirkung entfaltet und auch die Füllfasern in sich einbettet und damit die mechanische Beanspruchung der Füllfasern verringert.

Außerdem werden insbesondere bei hohem Bindemittelanteil die Fasern von dem zerfließenden Bindemittel mitgerissen, so daß mit Sicherheit eine Feinstverteilung der Fasern im Mischgut erfolgt.

Aus dem gleichen Grund sollte auch bei einer vorteilhaften erfindungsgemäßen Ausführungsform der Gewichtsanteil der Füllfasern höchstens ungefähr 4/5 des Gesamtgewichts des Granulats betragen. Noch vorteilhafter ist es jedoch, wenn der Gewichtsanteil der Füllfasern ungefähr 3/4 oder 2/3 oder noch besser ungefähr die Hälfte des Gesamtgewichts beträgt.

Die Angaben über die Mindestanteile von Bindemittel und die Höchstanteile von Füllfasern -

schließen auch Granulate ein, bei denen der Bindemittelanteil den Füllfasernanteil überwiegt. So kann es für besondere Anwendungen auch denkbar sein, z. B. ein Granulat mit ungefähr 10 Gew.-% Füllfasern und 90 Gew.-% Bindemittel vorzusehen.

Als besonders vorteilhaft hat es sich erwiesen, wenn die Gewichtsanteile des Bindemittels und der Füllfasern ungefähr gleich groß sind.

Die vorstehend beschriebenen erfindungsgemäßen Granulate können ausschließlich aus Bindemittel und Füllfasern zusammengesetzt sein, wobei das Bindemittel und die Füllfasern weitgehend gleichmäßig miteinander vermischt sind. Es soll jedoch durch die vorstehend angegebenen Gewichtsanteile nicht ausgeschlossen sein, daß dem erfindungsgemäßen Granulat noch weitere Zuschlagstoffe beigegeben werden. Beispielsweise kann es sich hierbei um Zuschlagstoffe handeln, welche die Füllfasern beim Herstellen des Granulats noch besser vor mechanischen Einwirkungen - schützen. Es ist jedoch aber auch an Zuschlagstoffe zu denken, welche das Auflösen des Granulats in dem fließfähigen Bitumen und insbesondere dabei das Lösen der einzelnen Füllfasern voneinander verbessern oder gar an Zuschlagstoffe, welche für die spätere Bitumenmasse wichtig sind, so daß bereits die Zugabe dieser Zuschlagstoffe zu dem Granulat eine spätere getrennte Zugabe dieser Zuschlagstoffe erübrigt.

Wie bereits eingangs beschrieben, sollten die für das erfindungsgemäße Granulat verwendeten Füllfasern möglichst lang sein, um eine möglichst gute thixotrope Wirkung zu erzeugen. Hierbei hat es sich als günstig erwiesen, wenn die Füllfasern eine Länge im Bereich von ungefähr 0,01 bis 6 mm haben. Vorteilhafter ist jedoch eine durchschnittliche Länge der Füllfasern, die im Bereich von ungefähr 0,5 bis 3 mm liegt. Im Rahmen eines besonders bevorzugten Ausführungsbeispiels des erfindungsgemäßen Granulats wurden Füllfasern mit einer Länge im Bereich von ungefähr 0,5 bis 3 mm verwendet.

Bezüglich des Bindemittels sind mehrere Möglichkeiten denkbar. Beispielsweise kann ein Bindemittel, welches in durch Erhitzen fließfähigem Bitumen seine Bindungswirkung verlieren soll, aus einem Stoff bestehen, dessen Schmelzpunkt unterhalb dem des Bitumens liegt. Andererseits ist es aber auch möglich, bei einem Bindemittel, welches seine Bindewirkung in durch Lösungsmittel fließfähig gehaltenem Bitumen verlieren soll, einen Stoff zu verwenden, der sich in dem jeweiligen Lösungsmittel ebenfalls auflöst. Da gegebenenfalls die Gefahr bestehen kann, daß eventuell als Bindemittel verwendete Fremdstoffe in der Bitumenmasse störend wirken, ist es vorteilhaft, wenn das Bindemittel Bitumen umfaßt. Dabei können jedoch in dem Bindemittel noch weitere Zusatzstoffe enthalten sein, welche diesem noch verbesserte Eigenschaften verleihen.

Die einfachste und vor allem kostengünstigste Form des Bindemittels besteht jedoch darin, daß das Bindemittel ausschließlich Bitumen ist.

Bei den bisher erläuterten Ausführungsbeispielen des erfindungsgemäßen Granulats wurden keine näheren Angaben hinsichtlich der Füllfasern als solche gemacht. Die Füllfasern können theoretisch aus allen möglichen als Thixotropiermittel geeigneten Fasern sein, z. B. auch aus Asbest. Unter Kostengesichtspunkten und auch angesichts der gesundheitsschädigenden Eigenschaften von Asbest ist es jedoch besonders vorteilhaft, wenn die Füllfasern aus pflanzlichen Stoffen herstellbar sind, insbesondere wenn die Füllfasern aus Baumwolle und oder Linters und/oder Holz herstellbar sind.

Bei praktischen Versuchen hat sich ergeben, daß eine gute thixotrope Wirkung und eine gute Beständigkeit der Füllfasern dann gegeben ist, wenn die Füllfasern Cellulosefasern umfassen. Am vorteilhaftesten ist es hierbei, wenn die Füllfasern ausschließlich Cellulosefasern sind.

Die besten thixotropen Eigenschaften sind dann erhältlich, wenn die Cellulosefasern feinfibrilliert aufgemahlen sind.

Schließlich liegt der Erfindung die Aufgabe zugrunde, ein Verfahren zur Herstellung eines Füllfasern umfassenden Granulats zu schaffen.

Diese Aufgabe wird erfindungsgemäß bei einem Verfahren zur Herstellung eines Füllfasern umfassenden Granulats dadurch gelöst, daß Bindemittel und Füllfasern mit den vorstehend beschriebenen Eigenschaften und den vorstehend beschriebenen Gewichtsanteilen miteinander vermischt und granuliert werden.

Insbesondere hat es sich als zweckmäßig erwiesen, wenn das Granulieren durch Extrudieren der Mischung aus Bindemittel und Füllfasern erfolgt.

Außerdem ist ein Verfahren vorteilhaft, bei welchem das Granulieren durch Auswalzen der Mischung aus Füllfasern und Bindemittel in Fladen sowie ein sich anschließendes Zerschneiden der Fladen erfolgt.

Im Rahmen der vorliegenden Erfindung sind unter dem Begriff Bitumen - wie eingangs erwähnt - sämtliche bituminösen Produkte zu verstehen. Aus Kostengründen und aus Gründen der weiten Verbreitung ist es erfindungsgemäß besonders vorteilhaft, das Erdölprodukt Bitumen oder dessen verbesserte Produkte zu verwenden.

Weitere Merkmale und Vorteile der erfindungsgemäßen Verfahren sowie des erfindungsgemäßen Granulats sind Gegenstand des nachstehend beschriebenen Ausführungsbeispiels.

Zur Herstellung des erfindungsgemäßen Granulats werden feinfibrilliert aufgemahlene Cellulosefasern mit einer Länge zwischen 0,5 und 3 mm sowie Bitumen jeweils mit gleichen Gewichtsanteilen so lange miteinander vermischt, bis eine im wesentlichen gleichmäßige Verteilung der Komponenten erreicht ist und unter Verwendung eines Extruders in bekannter Weise granuliert.

Alternativ dazu kann auch das Granulieren dadurch erfolgen, daß das Gemisch aus Cellulosefasern und Bitumen mittels eines Walzwerks zu einem Fladen ausgewalzt wird, der durch nachgeschaltete Schneidmaschinen zu Granulaten beliebiger Größe geschnitten werden kann.

Dieses Granulat aus Bitumen und Cellulosefasern hat nun den Vorteil, daß es sich sehr leicht verpacken und transportieren läßt. Außerdem kann dieses Granulat beim Herstellen, beispielsweise von Asphalt, über eine automatische Transport-und Dosiervorrichtung zugegeben werden, da es ausgezeichnete Fließeigenschaften hat.

Bei der Herstellung von Asphalt für Straßenbeläge werden üblicherweise die Mineralstoffe im Mischer vorgelegt. Im Gegensatz zu den bisher bekannten Verfahren erübrigt sich ein Vormischen der Mineralstoffe mit der anschließend zugegebenen Cellulose, da durch die Zugabe des erfindungsgemäßen Granulats sofort auch eine Zugabe von Bindemitteln, d. h. also Bitumen, möglich ist. Dadurch kann der Mischvorgang wesentlich schneller als bei der bisher bekannten Vorgehensweise verlaufen.

Im heißem flüssigem Bitumen lösen sich die erfindungsgemäßen Granulatkörper dadurch auf, daß das in diesen als Bindemittel enthaltene Bitumen ebenfalls flüssig wird und beim Wegschmelzen und Wegfließen die einzelnen in dem Bindemittel Bitumen eingebetteten Cellulosefasern mitnimmt oder mitzieht, so daß diese Cellulosefasern gar keine Gelegenheit mehr haben, miteinander zu verwatten oder zu agglomereeren.

Aus diesem Grund kann die Gefahr von Fehlmischungen aufgrund ungleichmäßiger Verteilung von Cellulosefasern in dem Bitumen ausgeschlossen werden.

**Ansprüche**

1. Füllfasern umfassendes Granulat, insbesondere zum Einbringen der Füllfasern in Bitumenmassen, **dadurch gekennzeichnet,** daß das Granulat ein in fließfähigem Bitumen seine Bindungswirkung verlierendes Bindemittel und Füllfasern aufweist.

2. Granulat nach Anspruch 1, dadurch gekennzeichnet, daß der Gewichtsanteil des Bindemittels mindestens ungefähr 1/5 des Gesamtgewichts des Granulats beträgt.

3. Granulat nach Anspruch 2, dadurch gekennzeichnet, daß der Gewichtsanteil des Bindemittels mindestens ungefähr 1 4 des Gesamtgewichts des Granulats beträgt.

4. Granulat nach Anspruch 3, dadurch gekennzeichnet, daß der Gewichtsanteil des Bindemittels mindestens ungefähr 1 3 des Gesamtgewichts des Granulats beträgt.

5. Granulat nach Anspruch 4, dadurch gekennzeichnet, daß der Gewichtsanteil des Bindemittels mindestens ungefähr die Hälfte des Gesamtgewichts des Granulats beträgt.

6. Granulat nach einem der Ansprüche 1 bis 5, dadurch gekennzeichnet, daß der Gewichtsanteil der Füllfasern höchstens ungefähr 4,5 des Gesamtgewichts des Granulats beträgt.

7. Granulat nach Anspruch 6, dadurch gekennzeichnet, daß der Gewichtsanteil der Füllfasern höchstens ungefähr 3,4 des Gesamtgewichts des Granulats beträgt.

8. Granulat nach Anspruch 7, dadurch gekennzeichnet, daß der Gewichtsanteil der Füllfasern höchstens ungefähr 2,3 des Gesamtgewichts des Granulats beträgt.

9. Granulat nach Anspruch 8, dadurch gekennzeichnet, daß der Gewichtsanteil der Füllfasern höchstens ungefähr die Hälfte des Gesamtgewichts des Granulats beträgt.

10. Granulat nach einem der Ansprüche 1 bis 9, dadurch gekennzeichnet, daß die Gewichtsanteile des Bindemittels und der Füllfasern ungefähr gleich groß sind.

11. Granulat nach einem der Ansprüche 1 bis 10, dadurch gekennzeichnet, daß die Füllfasern eine Länge im Bereich von ungefähr 0,01 bis 6 mm haben.

12. Granulat nach Anspruch 11, dadurch gekennzeichnet, daß die Füllfasern eine durchschnittliche Länge aufweisen, die im Bereich von ungefähr 0,5 bis 3 mm liegt.

13. Granulat nach Anspruch 11 oder 12, dadurch gekennzeichnet, daß die Füllfasern eine Länge im Bereich von ungefähr 0,5 bis 3 mm haben.

14. Granulat nach einem der Ansprüche 1 bis 13, dadurch gekennzeichnet, daß das Bindemittel Bitumen umfaßt.

15. Granulat nach Anspruch 14, dadurch gekennzeichnet, daß das Bindemittel Bitumen ist.

16. Granulat nach einem der Ansprüche 1 bis 15, dadurch gekennzeichnet, daß die Füllfasern aus pflanzlichen Stoffen herstellbar sind.

17. Granulat nach Anspruch 16, dadurch gekennzeichnet, daß die Füllfasern aus Baumwolle hergestellt sind.

18. Granulat nach Anspruch 16, dadurch gekennzeichnet, daß die Füllfasern aus Linters herstellbar sind.

19. Granulat nach Anspruch 16, dadurch gekennzeichnet, daß die Füllfasern aus Holz herstellbar sind.

20. Granulat nach einem der Ansprüche 1 bis 19, dadurch gekennzeichnet, daß die Füllfasern Cellulosefasern umfassen.

21. Granulat nach Anspruch 20, dadurch gekennzeichnet, daß die Füllfasern Cellulosefasern sind.

22. Granulat nach Anspruch 21, dadurch gekennzeichnet, daß die Cellulosefasern feinfibrilliert aufgemahlen sind.

23. Verfahren zur Herstellung von Bitumenmassen, die mit Füllfasern stabilisiertes Bitumen umfassen, dadurch gekennzeichnet, daß bei Herstellung der Bitumenmassen zum Einmischen der Füllfasern in das fließfähige Bitumen ein sich in dem fließfähigen Bitumen auflösendes, die Füllfasern umfassenden Granulat, insbesondere gemäß einem oder mehreren der voranstehenden Ansprüchen verwendet wird.

24. Verfahren zur Herstellung eines Füllfasern umfassenden Granulats, dadurch gekennzeichnet, daß Bindemittel und Füllfasern entsprechend den Ansprüchen 1 bis 22 miteinander vermischt und granuliert werden.

25. Verfahren nach Anspruch 24, dadurch gekennzeichnet, daß das Granulieren durch Extrudieren der Mischung aus Bindemittel und Füllfasern erfolgt.

26. Verfahren nach Anspruch 24, dadurch gekennzeichnet, daß das Granulieren durch Auswalzen der Mischung aus Füllfasern und Bindemittel in Fladen sowie ein sich anschließendes Zerschneiden der Fladen erfolgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 052 720 (LECHLER-CHEMIE) * Anspruch 1; Seite 17, Beipsiel 11; Seiten 18,19, Beispiel 16 * --- | 1,23 | C 08 L 95/00 C 08 K 7/02 C 08 J 3/22 |
| A | US-A-4 358 320 (ALFRED MARZOCCHI) * Zusammenfassung * --- | | |
| A | US-A-4 613 376 (NILS-OLOV NILSSON) * Zusammenfassung * --- | | |
| A | FR-A-2 264 122 (MONSANTO) * Ansprüche 1,17 * ----- | | |

RECHERCHIERTE SACHGEBIETE (Int. Cl.4)

C 08 L
C 08 K

Der vorliegende Recherchenbericht wurde für alle Patentansprüche erstellt

| Recherchenort | Abschlußdatum der Recherche | Prüfer |
|---|---|---|
| DEN HAAG | 02-08-1988 | GIRARD Y.A. |